# EUROPEAN PATENT APPLICATION

(11) **EP 4 410 847 A1**
(43) Date of publication of application: **07.08.2024**
(21) Application number: 22876294.4
(22) Date of filing: 28.09.2022
(51) Int. Cl.: C08F 20/36, C09K 3/18

(54) **POLYMER FOR WATER-REPELLENT, WATER-REPELLENT COMPOSITION, AND WATER REPELLENT-TREATED PRODUCT**

(30) Priority: 30.09.2021 JP 2021160377
(71) Applicant: NOF Corporation, Shibuya-ku Tokyo 150-6019 (JP)
(72) Inventor: KOMIYAMA Yutaka, Chita-gun, Aichi 470-2373 (JP); HANADA Mayu, Chita-gun, Aichi 470-2373 (JP); KATOH Masanori, Amagasaki-shi Hyogo 660-0095 (JP)
(74) Representative: Mewburn Ellis LLP
(86) International application number: PCT/JP2022/036069
(87) International publication number: WO 2023/054428

(57) **Abstract**

An object is to provide a polymer for a water repellent free from fluorine and capable of imparting excellent water repellent property on a product to be treated, a water repellent composition and a product treated with a water repellent.

A polymer for a water repellent, comprises a homopolymer comprising structural units derived from a monomer (a) represented by formula (1) or a copolymer comprising the structural units derived from the monomer (a) and structural units derived from a vinyl monomer (b) copolymerizable with the monomer (a). A mass ratio ((a)/(b)) of a mass of the monomer (a) with respect to a mass of the monomer (b) is 100/0 to 30/70. 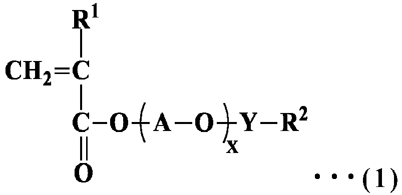 (R¹ represents hydrogen atom, methyl group, chlorine, bromine or iodine, R² represents alkyl group having a carbon number of 12 to 24, A represents alkylene group having a carbon number of 1 to 10, X represents 0 or 1, Y represents a structure selected from the group consisting of hydroxy urethane structures represented by formula (2), formula (3), formula (4) and formula (5).)

## Description

### TECHNICAL FIELD

The present invention is related to a polymer for a water repellent capable of imparting excellent water repellency on a product to be treated and free from a fluorine compound, water repellent composition and water repellent-treated product.

### BACKGROUND ARTS

Until now, it has been used a surface treatment agent containing a fluorine-containing compound for imparting water repellent property to fibers, leathers, papers and the like. However, recently, the load of the fluorine-containing compound onto environment is concerned. Thus, it is demanded a surface treatment agent capable of imparting excellent water repellent property and free from the fluorine-containing compound.

As the non-fluorine series surface treatment agent, an acrylic resin containing a long-chain alkyl group and silicone resin are known.

For example, according to patent document 1, it is disclosed that water repellent property can be imparted onto polyester fabric and nylon fabric by a non-fluorine series polymer including structural units derived from a (meth)acrylate having urethane structure and long-chain alkyl group.

According to patent document 2, it is disclosed that water repellent property can be imparted onto a coated film, by a paint composition containing a non-fluorine series polymer including structural units derived from a (meth)acrylate having a hydroxy urethane structure and polydimethylsiloxane structure.

### [PRIOR TECHNICAL DOCUMENTS]

### [PATENT DOCUMENTS]

[PATENT DOCUMENT 1] Japanese patent publication No. 2019-026746 A
[PATENT DOCUMENT 2] Japanese patent publication No. 2016-074831 A

### SUMMARY OF THE INVENTION

### [OBJECT TO BE SOLVED BY THE INVENTION]

However, as the non-fluorine-series polymer of patent document 1 has the urethane structure, the film-forming property on a hydrophilic material such as natural fibers, natural leathers and the like is poor, so that it is difficult to impart sufficient water repellent property. As the non-fluorine series polymer of patent document 2 has low crystallinity due to the polydimethylsiloxane structure, in the case that water is continuously distributed as rain falls, water easily penetrates so that water repellent property satisfying utility cannot be obtained.

Considering the problems described above, an object of the present invention is to provide a polymer for a water repellent free from a fluorine-containing compound and capable of imparting excellent water repellent property on a product to be treated, a water repellent composition and a product treated with the water repellent.

### [SOLUTION FOR THE OBJECT]

The present invention provides [1] to [4].

[1] A polymer for a water repellent, said polymer comprising a homopolymer comprising structural units derived from a monomer (a) represented by a following formula (1) or a copolymer comprising said structural units derived from said monomer (a) and structural units derived from a vinyl monomer (b) copolymerizable with said monomer (a),
   wherein a mass ratio ((a)/(b)) of a mass of said monomer (a) with respect to a mass of said monomer (b) is 100/0 to 30/70. 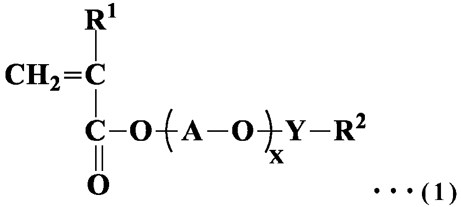 (In the formula (1),
   R¹ represents hydrogen atom, methyl group, chlorine, bromine or iodine,
   R² represents alkyl group having a carbon number of 12 to 24,
   A represents alkylene group having a carbon number of 1 to 10,
   X represents 0 or 1, and
   Y represents a structure selected from the group consisting of hydroxy urethane structures represented by a following formula (2), formula (3), formula (4) and formula (5).) 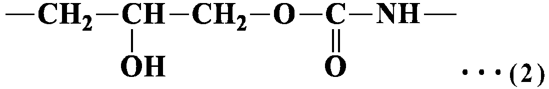 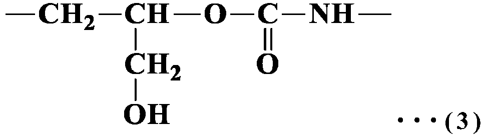 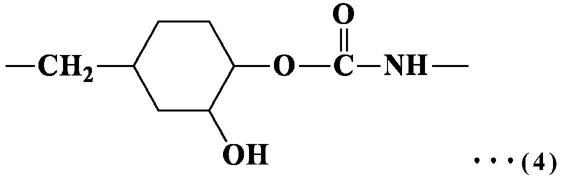 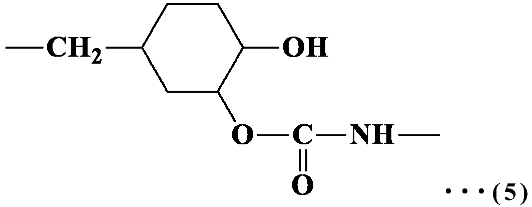
[2] The polymer for a water repellent of [1], wherein said vinyl monomer (b) is represented by a following formula (6). 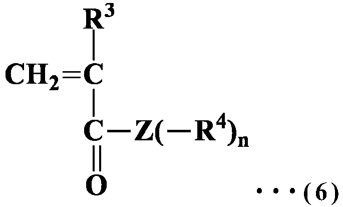 (In the formula (6),
   R³ represents hydrogen atom, methyl group, chlorine, bromine or iodine,
   Z represents oxygen atom or nitrogen atom,
   R⁴ represents hydrogen atom, or a hydrocarbon group having a carbon number of 1 to 22 and which may be substituted, and
   n represents 1 when Z comprises oxygen atom, and n represents 2 when Z comprises nitrogen atom.)
[3] A water repellent composition comprising the polymer for a water repellent of [1] or [2] and a liquid medium.
[4] A water repellent-treated product to which the polymer for a water repellent of [1] or [2] is adhered.

### [EFFECTS OF THE INVENTION]

According to the present invention, it is possible to provide a polymer for a water repellent free from a fluorine-containing compound and capable of imparting excellent water repellent property to a product to be treated, a water repellent composition and a water repellent treated product having excellent water repellent property.

### EMBODIMENTS FOR CARRYING OUT THE INVENTION

The present invention will be described further in detail below.

### (Polymer for a water repellent)

The polymer for a water repellent of the present invention adheres to an object and present as a film, so that water repellent property can be imparted.

The polymer is a non-fluorine series polymer containing structural units derived from at least one monomer (a) represented by formula (1). The polymer of the present invention may be a homopolymer composed of structural units derived from a monomer (a). Further, the polymer may be a copolymer containing the structural units derived from the monomer (a) and structural units derived from at least one kind of vinyl monomer (b) copolymerizable with this. Further, in the specification, "non-fluorine series" means that fluorine atoms are not contained.

### (Monomer (a))

The monomer (a) is a monomer represented by formula (1).

In the formula (1), R¹ represents hydrogen atom, methyl group, chlorine, bromine or iodine, and preferably hydrogen atom or methyl group on the viewpoint of facilitating polymerization reaction.

In the formula (1), R² represents alkyl group having a carbon number of 12 to 24. With the alkyl group having a carbon number of 12 to 24, crystallization of a side chain is induced and a dense film, in which the alkyl groups are arranged on the surface of a treated product, can be formed, so that excellent water repellent property can be obtained. As the alkyl group having a carbon number of 12 to 24, straight-chain or branched-chain alkyl group having a carbon number of 12 to 24 may be listed. On the viewpoint of excellent water repellent property and ease of industrial production, the carbon number of R² is preferably 12 to 22 and more preferably 18 to 22. Further, R² represents the straight-chain alkyl group.

In the formula (1), A represents alkylene group having a carbon number of 1 to 10, and X represents 0 or 1. The carbon number of A is preferably 1 or higher and preferably 4 or lower.

In the formula (1), Y represents one kind of structure selected from the group consisting of hydroxy urethane structures represented by formula (2), formula (3), formula (4) and formula (5).

One kind of the monomer (a) may be applied alone, or two or more kinds of the monomers (a) may be applied. With the hydroxy urethane structure, the film-forming property of the polymer onto the treated product can be improved and excellent water repellent property can be imparted. On the viewpoint of excellent water repellent property, Y may most preferably be the structure of the formula (2) or formula (3).

Further, as the monomer (a), it is particularly preferred to apply a compound having a molecular weight of 355 to 800.

The method of producing the monomer (a) is not particularly limited, it may be produced by a known method. For example, it may be obtained by addition reaction of a compound having both of (meth) acryloyl group and cyclic carbonate group and an amine compound with alkyl group having a carbon number of 12 to 24.

On the viewpoint of improving the water repellent property further, the polymer for a water repellent of the present invention may preferably contain the structural units derived from at least one kind of the monomer (a) and the structural units derived from at least one kind of the monomer (b) copolymerizable with the monomer (a).

### (Vinyl monomer (b))

The vinyl monomer (b) is a vinyl group-containing monomer copolymerizable with the monomer (a). For example, (meth)acrylic ester compounds, (meth)acrylamide compound, aromatic alkenyl compound, halogenated vinyl compound except a fluorine atomcontaining compound, vinyl cyanide compound and the like may be listed. Among them, at least one kind of (meth)acrylic ester compound or (meth)acrylamide compound may preferably be copolymerized.

The (meth)acrylic acid ester compound or (meth)acrylamide compound applied as the vinyl monomer (b) is a compound having at least one vinyl group, and the compound represented by the formula (6) may preferably be applied.

In the formula (6), R³ represents hydrogen atom, methyl group, chlorine, bromine or iodine, Z represents oxygen atom or nitrogen atom, R⁴ represents hydrogen atom or hydrocarbon group having a carbon number of 1 to 22, and n represents 1 in the case that Z is oxygen atom and 2 in the case that Z is nitrogen atom. The hydrocarbon group may have a substituent. The compound represented by the formula (6) applied as the vinyl monomer (b) may contain one or more compounds in which R⁴ has the hydrocarbon group having the substituent and one or more compounds in which R⁴ is the hydrocarbon group having no substituent.

The compound in which R⁴ is hydrogen atom may be (meth)acrylic acid, (meth)acrylamide or the like.

As the hydrocarbon group in which R⁴ has no substituent, for example, linear-chain, branched-chain or cyclic alkyl group having a carbon number 1 to 22 may be listed.

Specific compounds of the linear-chain or branched chain alkyl group having a carbon number of 1 to 22 may be, for example, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acylate, 2-ethyl hexyl (meth)acrylate, isooctyl (meth)acrylate, nonyl (meth)acrylate, decyl (meth)acrylate, isodecyl (meth)acrylate, lauryl (meth)acrylate, hexadecyl (meth)acrylate, stearyl (meth)acrylate, isostearyl (meth)acrylate, docosyl (meth)acrylate, dimethyl (meth)acrylamide, diethyl (meth)acrylamide or the like. On the viewpoint of water repellent property and ease of copolymerization with the monomer (a), methyl (meth)acrylate, n-butyl (meth)acrylate, tert-butyl (meth)acrylate, lauryl (meth)acrylate, stearyl (meth)acrylate, isostearyl (meth)acrylate are preferred. Stearyl (meth)acrylate is more preferred.

The cyclic hydrocarbon group in which R⁴ does not have a substituent may be, for example, monocyclic or polycyclic alkyl group having a carbon number of 3 to 22. For example, cyclohexyl (meth)acrylate, isobornyl (meth)acrylate, dicyclopentanyl (meth)acrylate, 1-adamantyl (meth)acrylate and the like are listed, and on the viewpoint of durability of water repellent property, cyclohexyl (meth)acrylate and isobornyl (meth)acrylate are preferred.

In the case that the hydrocarbon group in R⁴ has the substituent, such substituent may be a substituent composed of at least one kind selected from the group consisting of hydroxyl group, ether group, epoxy group, carbonyl group, ester group, amide group, isocyanate group, urethane group, urea group, vinyl group, amino group, onium salt group, heterocyclic group, aryl group, organosiloxy group and polydimethylsiloxane group. Among such substituents, R4 may preferably be hydrocarbon group having polydimethylsiloxane group. The molecular weight of the monomer containing the hydrocarbon group having polydimethylsiloxane group may preferably be 1,000 to 30,000.

Specific compounds whose hydrocarbon groups have substituents may be, for example, 2-hydroxyethyl (meth)acrylate, 2-hydroxypropyl (meth)acrylate, 2-hydroxybutyl (meth)acrylate, glycerol mono (meth)acrylate, polyethylene glycol (meth)acrylate, polypropylene glycol (meth)acrylate, polyethylene glycol di(meth)acrylate, polypropylene glycol di(meth)acrylate, methoxyethyl (meth)acrylate, methoxy polyethylene glycol (meth)acrylate, methoxy polypropylene glycol (meth)acrylate, glycidyl (meth)acrylate, (2-oxo-1,3-dioxorane-4-yl) methyl (meth)acrylate, isocyanatoethyl (meth)acrylate, dimethyl amino ethyl (meth)acrylate, trimethyl ammonium ethyl chloride (meth)acrylate, tetrahydrofurfuryl (meth)acrylate, benzyl (meth)acrylate, 4-hydroxy phenyl (meth)acrylate, "Placcel FM series" (manufactured by Daicel corporation, ε-caprolactone addict of 2-hydroxyethyl methacrylate, trade name), 3-(trimethoxy silyl) propyl (meth) acrylate, "Silaplane FM-0721" (manufactured by JNC corporation, polydimethylsiloxane group-containing macromonomer, molecular weight 5,000, tradename), "Silaplane FM-0725" (manufacturing by JNC corporation, polydimethylsiloxane group-containing macromonomer, molecular weight 10,000, tradename), "Silaplane FM-7721" (manufactured by JNC corporation, polydimethylsiloxane group-containing bifunctional macromonomer, molecular weight 5,000, tradename), diacetone (meth) acrylamide, n-methylol (meth)acrylamide or the like.

The aromatic alkenyl compound selected as the vinyl monomer (b) may be, for example, styrene, α-methyl styrene, p-methoxy styrene or the like.

The halogenated vinyl compound except a fluorine atomcontaining compound selected as the vinyl monomer (b) may be, for example, vinyl chloride, vinyl bromide, vinyl iodide or the like.

The vinyl cyanide compound selected as the vinyl monomer (b) may be, for example, (meth)acrylonitrile or the like.

### (Compositional ratio of polymer for water repellent)

According to the polymer for a water repellent of the present invention, the mass ratio (a)/(b) of the structural units derived from the monomer (a) and the structural units derived from the monomer (b) is in a range of 100/0 to 30/70. On the viewpoint of water repellent property or solubility into various kinds of solvents, it may preferably be 90/10 to 30/70 and more preferably be 80/20 to 50/50. When the ratio of the structural units derived from the monomer (a) is lower than the range of 30/70, the water repellent property tends to be lowered.

### (Method of producing polymer for water repellent)

Then, the method of producing the polymer for a water repellent of the present invention will be described. The polymer of the present invention can be obtained by subjecting mixture of monomers containing at least one kind of the monomer (a) to radical polymerization. The method of polymerization is not particularly limited, and known polymerization methods such as solution polymerization, emulsion polymerization, suspension polymerization and the like may be applied.

As a polymerization initiator, organic peroxides, azo compounds, persulfates or the like may be applied. Specific examples of the polymerization initiators may be tert-butyl peroxypivalate, tert-hexyl peroxyneodecanate, 1,1,3,3-tetramethyl butyl peroxy-2-ethyl hexanoate, di-3,5,5-trimethyl hexanoyl peroxide, 2,2'-azobis isobutyronitrile, 2,2'-azo bis (2,4-dimethyl valeronitrile), 2,2'-azo bis (2-methylpropionamidine) dihydrochloride, ammonium persulfate or the like. The amount of the polymerization initiator used can be determined, based on the combination of the applied monomers and reaction condition.

According to the polymerization method by solution polymerization, various kinds of monomers can be dissolved in an optional solvent followed by replacement with nitrogen and heating while stirring under the presence of the polymerization initiator to perform the polymerization.

According to the polymerization method with emulsion polymerization, various kinds of monomers can be emulsified in water or mixture of an organic solvent and water followed by replacement with nitrogen and heating while stirring, under the presence of the polymerization initiator and a surfactant, to perform the polymerization.

The arrangement of the structural units derived from the monomer (a) and structural units derived from the vinyl monomer (b) copolymerizable with the monomer (a) in the polymer for a water repellent of the present invention is not particularly limited, and may be any of random, block, graft and the like.

### (Weight average molecular weight)

The polymer for a water repellent of the present invention is a polymer whose weight average molecular weight of polystyrene equivalent is in a range of 5,000 to 2,000,000. On the viewpoint of good water repellent property, the range is preferably 10,000 to 1,900,000. More preferably, the range is 30,000 to 1,800,000. When the weight average molecular weight is within the range, the uniformity of a film composed of the polymer is improved so that the water repellent property is good.

In the polymer for a water repellent of the present invention, a chain transfer agent may be applied during the polymerization for adjusting the molecular weight. As the chain transfer agent, lauryl mercaptan, tert-butyl alcohol and the like are listed. The amount of the chain transfer agent used may be appropriately determined based on the combination of the applied monomers and reaction condition.

### (Water repellent composition)

The water repellent composition of the present invention can be produced by mixing the polymer of the present invention and a liquid medium. With the water repellent composition, the adhesion of the polymer for the water repellent on a product to be treated can be facilitated.

As the liquid medium, although it is not limited as far as the polymer can be dissolved or dispersed therein, the medium may be, for example, acetone, methyl ethyl ketone, methyl isobutyl ketone, cyclohexanone, water, ethanol, n-propanol, isopropyl alcohol, propylene glycol, dipropylene glycol, tripropylene glycol, dipropylene glycol monomethyl ether, ethyl acetate, butyl acetate, tetrahydrofuran, dimethyl formaldehyde, toluene, xylene, n-hexane, isohexane, n-heptane, cyclopentane, cyclohexane, methyl cyclohexane, isoparaffin based solvent or the like. Among these liquid media, on the viewpoint of texture and prevention of the deterioration of the product to be treated, a fatty hydrocarbon solvent is preferred. Preferably, n-hexane, isohexane, n-heptane, cyclopentane, cyclohexane and methyl cyclohexane are listed, and n-hexane, n-heptane and cyclohexane are particularly preferred. The liquid medium may be applied alone or two or more kinds may be applied in combination.

When the total content of the polymer for the water repellent and liquid medium is 100 mass parts, the content of the polymer is preferably 0.1 to 10 mass parts and more preferably 1 to 10 mass parts.

An additive may be further contained in the water repellent composition, particularly surface treating composition, of the present invention as far as the effect of the present invention is not suppressed, in addition to the polymer and liquid medium. For example, when the total content of the polymer and liquid medium is 100 mass parts, the content of the additive is preferably 10 mass parts or lower and more preferably 5.0 mass parts or lower.

As the additive, a polymer capable of imparting water repellent property other than the polymer described above, a cross-linking agent, anti-fungal and anti-odor agent, frame-detergent, antistatic agent, softener, anti-wrinkle agent and the like are listed. Particularly for treating fabrics, clothes and the like to prevent the deterioration of the water repellent property by laundry, the cross-linking agent may preferably be added. As the cross-linking agent, it may be listed a compound having at least one of methylol melamine, isocyanate group, and blocked isocyanate group. The water repellent property can be maintained after laundry by adhering the cross-linking agent onto the product to be treated followed by heat treatment.

### (Product treated with water repellent)

The water repellent property can be imparted onto a product to be treated with the inventive polymer to provide a product treated with the water repellent. As applicable products to be treated, for example, natural fibers such as cotton, hemp, silk or the like, regenerated fibers such as rayon, cupra or the like, semi-synthetic fibers such as acetate, triacetate or the like, synthetic fibers such as polyamide, polyester, polyacrylonitrile, polypropylene, polyvinyl chloride, polyvinyl alcohol or the like, natural leather, synthetic leather, fur, paper, wood, mixed fiber of them and fabric of them, cloth, shoes, and glass fiber, glass, brick, cement, metal, plastic or the like are listed. Among them, particularly high effect can be obtained in the case of synthetic fiber, natural fiber and natural leather.

As a method of treating with the water repellent composition of the present invention, conventional methods such as spray coating, bar coating, dip coating or the like can be applied to perform the coating. Further, after the water repellent composition of the present invention is applied on the product to be treated, the liquid medium can preferably be evaporated appropriately under room temperature or through heat treatment to dry the product to be treated. Although the temperature condition during the drying is not particularly limited, the temperature may be 20°C to 200°C and preferably 50 to 150°C, on the viewpoint of deterioration of the product to be treated by heat.

### EXAMPLES

Specific examples of the present invention will be described below.

First, production examples of the polymers for the water repellents of the inventive examples 1 to 15 and 18 to 25 will be described.

Further, monomer (a) represented by formula (1) or monomer (a') are shown as "HUMA- 2 to 8" and "UMA" in table 1.

### (Inventive Example 1)

First, 230 grams of cyclohexane was charged in a four-neck flask equipped with a thermometer, agitator and reflux condenser, and the inside of the flask was replaced with nitrogen. Then, monomer solution composed of 30.5 grams of " HUMA-1" (monomer (a)) shown in table 1 and 29 grams of cyclohexane and polymerization initiator solution composed of 0.5 grams of tert-hexyl peroxy neodecanate and 10 grams of cyclohexane were prepared, respectively. The temperature inside of a reaction vessel was elevated to a temperature of 55°C, and the monomer solution and polymerization initiator solution were simultaneously added dropwise, respectively, at the same time over 2 hours. After the dropwise addition, the reaction was performed at 55 °C over 5 hours, the temperature was elevated to 70°C, and the reaction was further performed over 2 hours to obtain solution containing a polymer.

The blend of the respective components of the inventive example 1 was shown in table 2. As shown in table 2, the mass ratio ((a)/(b)) of the structural units derived from the monomer (a) and structural units derived from the other vinyl monomer (b) of the polymer obtained in the inventive example 1 was proved to be 100/0.

### (Inventive examples 2 to 15 and 18 to 25)

According to the inventive examples 2 to 15 and 18 to 25, the kinds and contents of the monomers were changed as shown in tables 2 to 4. The respective monomers (a) was shown in table 1. The respective polymers for the water repellents of the inventive examples were produced according to the same method as that of the inventive example 1 except the above.

The production examples of the polymers for the water repellents of the inventive examples 16 and 17 are then described.

### (Inventive example 16)

First, into a four-necked flask of 500ml equipped with a thermometer, agitator and reflux condenser, mixture of 52.5 grams of "HUMA-2" (monomer (a)) described in table 1, 7.5 grams of stearyl methacrylate, 15 grams of "FM0725" (produced by JNC corporation, polydimethylsiloxane group containing macromonomer), 24 grams of tripropylene glycol and 193 grams of water and emulsion mixture composed of 2 grams of polyoxyethylene lauryl ether, 2 grams of polyoxyethylene isodecyl ether and 3 grams of octadecyl trimethyl ammonium chloride were charged. After the mixing and agitation at 60°C, ultrasonic wave was irradiated to perform the emulsifying and dispersion. 0.1 grams of lauryl mercaptan and 0.3 grams of 2,2'-azobis (2-methyl propion amidine) dichloride salt were then added into the dispersion under nitrogen atmosphere, followed by the reaction at 60°C over 6 hours to obtain aqueous series dispersed solution containing the polymer.

### (Inventive example 17)

According to the inventive example 17, the polymer for the water repellent of the inventive example was produced according to the same method as that of the inventive example 16, except that lauryl mercaptan was not incorporated.

### (Comparative examples 1 to 4)

According to the comparative examples 1 to 4, the kinds and contents of the monomers were changed as described in table 5. Further, the blends of the respective monomers (a) were shown in table 1. The polymers of the respective comparative examples were produced according to the same method as that of the inventive example 1, except the above.

The weight average molecular weights of the polymers obtained in the inventive examples 1 to 25 and comparative examples 1 to 4 were measured. Specifically, "TOSOH HLC-8320GPC" was applied as GPC system, two "TOSOH TSKgel Super Multipore HZ-M" and one "TOSOH TSKgel Super H-RC" were continuously equipped as columns, the temperature in the columns was made 40°C, the standard substance was made polystyrene, developing solvent was made tetrahydrofuran, developing solvent was flown at a flow rate of 1 ml/minute, o.1 ml of sample solution having a sample concentration of 0.1 mass% was injected, and "EcoSEC-Work Station GPC" calculation program was applied to perform the measurement.

### (Production of test piece)

Polyester fabric, cotton fabric and cow leather were applied as evaluation materials.

The polymers of the respective inventive examples 1 to 15 and 18 to 25 and the respective comparative examples 1 to 4 described above were diluted with cyclohexane as liquid medium to produce solutions (water repellent compositions) each having a concentration of 2.0 mass %. As to polyester taffeta fabric and cotton fabric, they were dipped in the respective solutions to perform the application followed by heating and drying at 150°C over 3 minutes to produce test pieces (products treated by the water repellents). As to the cow leather, a spray gun was applied to spray the respective solutions to perform the application, followed by drying at room temperature to produce test pieces (products treated with water repellents).

The polymers according to the respective inventive examples 16 and 17 described above were diluted with water as the liquid medium to produce dispersions (water repellent compositions) each having a concentration of 2.0 mass%. As to the polyester fabric and cotton fabric, it was dipped into each dispersion to perform the application, followed by heating and drying at 150°C for 3 minutes to produce test pieces (products treated with water repellents). As to the cow leather, spray gun was applied to spray the respective dispersions, followed by drying at room temperature to produce test pieces (products treated with water repellents).

### (Water repellent property test)

The water repellent property of each test piece was evaluated based on JIS L 1092. "Spray Tester AW-5 (manufactured by Intech corporation) was applied as the testing machine. Each test piece was set in the testing machine and 250 ml of water was sprayed. Humidity state of the test piece after the spraying was evaluated according to the standard shown in table 6. As the value is higher, the water repellent property is better.

Further, the target values of the water repellent property were made 4 or higher in the case of the polyester fabric and 3 or higher in the case of the cotton fabric and cow leather which are highly hydrophilic and difficult to impart the water repellent property.

### (Evaluation results)

Tables 2 to 4 show the evaluation results of the inventive example 1 to 25, and table 5 shows the evaluation results of the comparative examples 1 to 4.

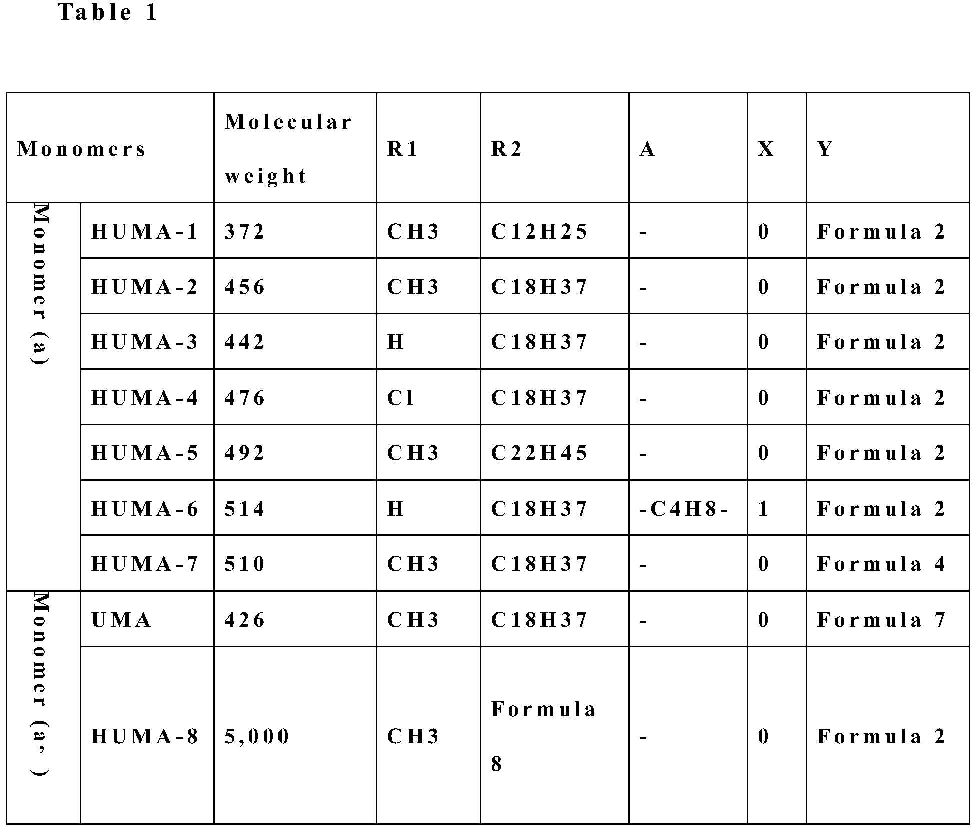

Further, the substituents of the formula (7) and formula (8) applied in the comparative monomers (a') shown in table 1 were as follows.

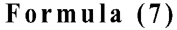

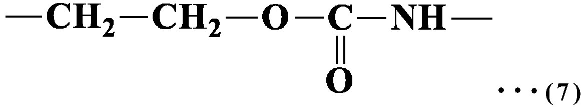

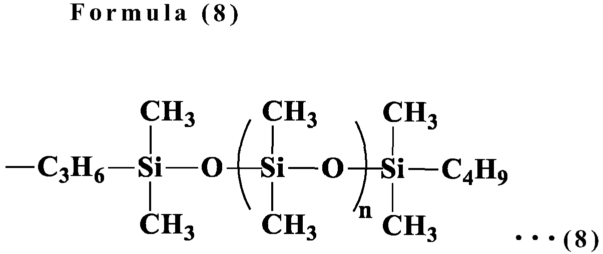

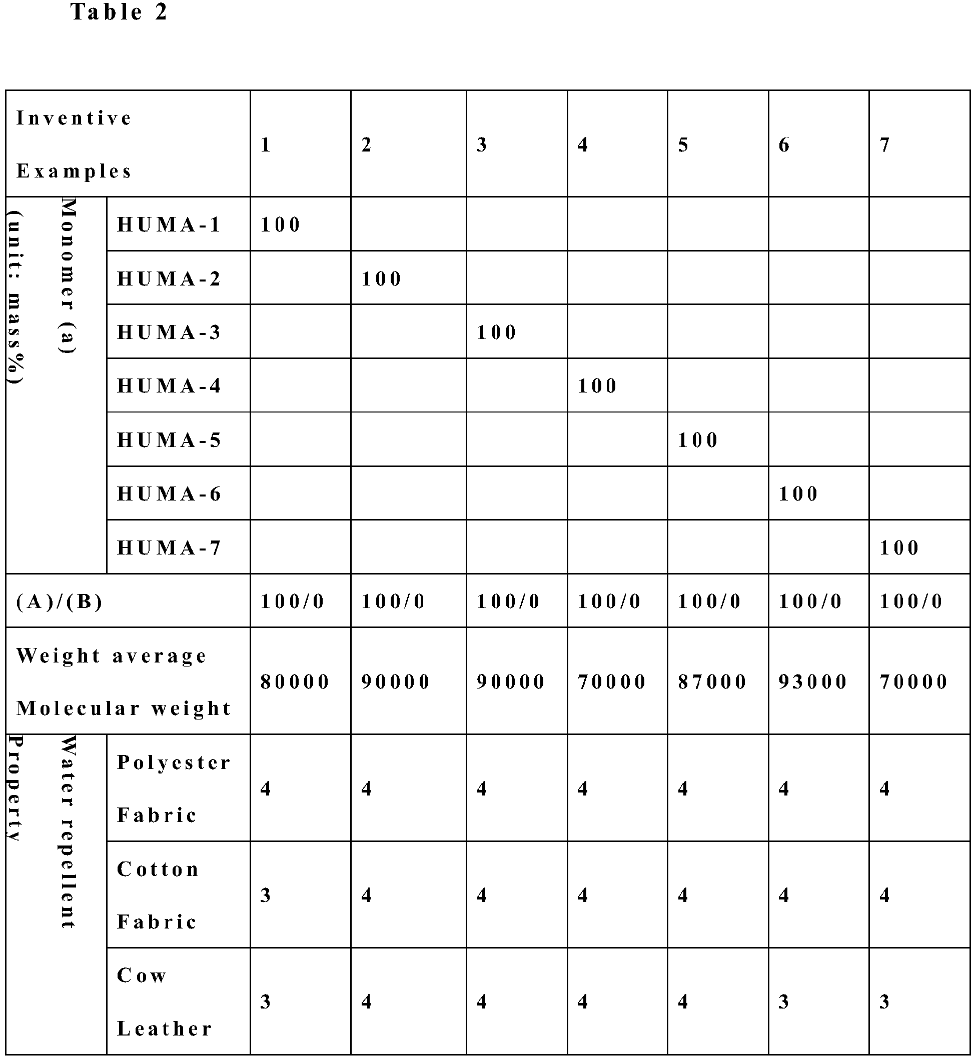

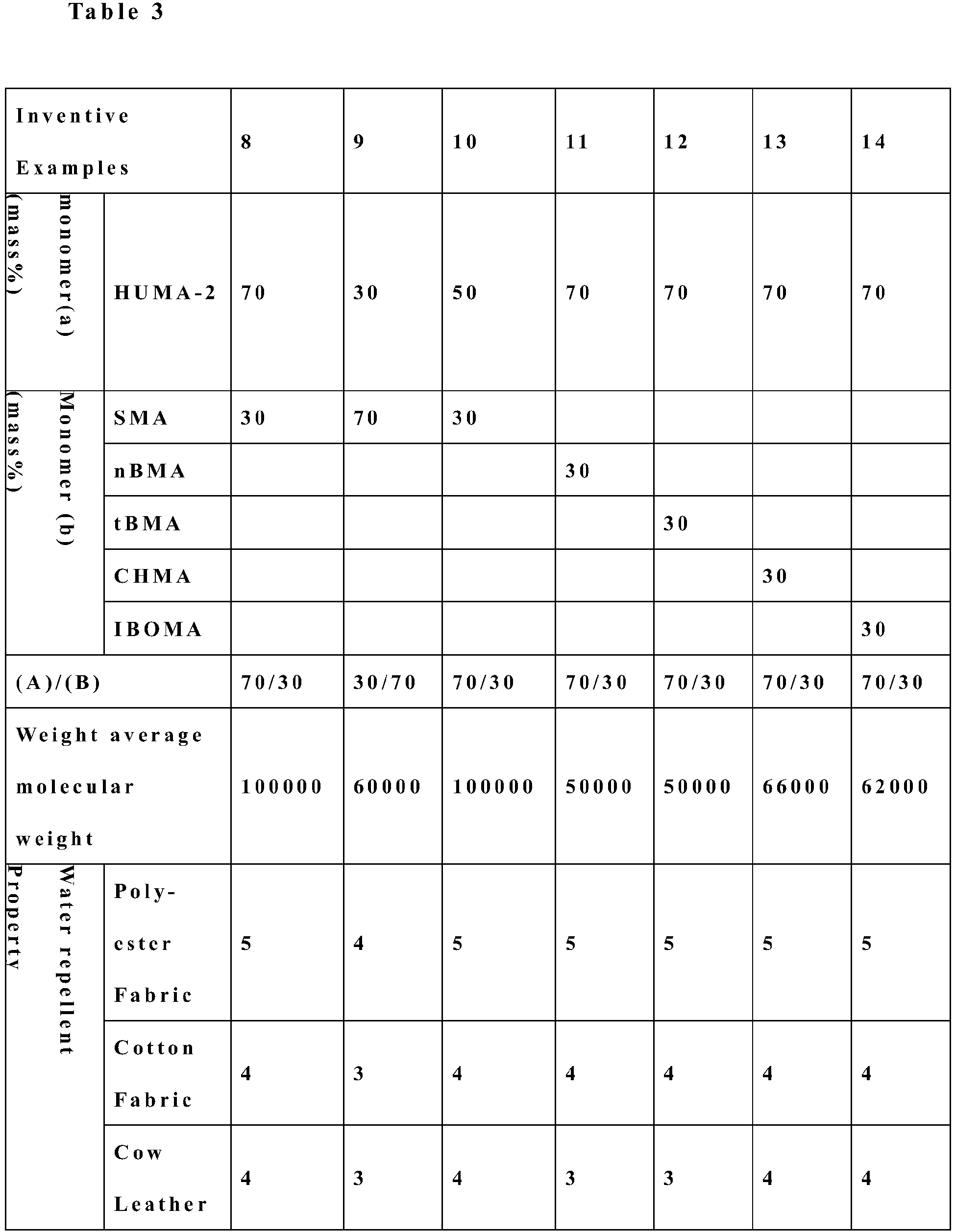

**Table 4**

| Inventive Examples | | 15 | 16 | 17 | 18 | 19 | 20 |
|---|---|---|---|---|---|---|---|
| Monomer (a) (mass%) | HUMA-2 | 70 | 70 | 70 | 70 | 70 | 70 |
| Monomer (b) (mass%) | SMA | 10 | 10 | 10 | 10 | 28 | 28 |
| | FM0725 | 20 | 20 | 20 | | | |
| | FM0721 | | | | 20 | | |
| | BzMA | | | | | 2 | |
| | PME400 | | | | | | 2 |
| | HEMA | | | | | | |
| | GMA | | | | | | |
| | MOI | | | | | | |
| | N-MAM | | | | | | |
| | DAAM | | | | | | |
| (A)/(B) | | 70/30 | 70/30 | 70/30 | 70/30 | 70/30 | 70/30 |
| Weight average Molecular weight | | 55000 | 800000 | 1800000 | 58000 | 57000 | 61000 |
| Water repellent Property | Polyester Fabric | 5 | 5 | 5 | 5 | 5 | 5 |
| | Cotton Fabric | 5 | 5 | 5 | 5 | 5 | 5 |
| | Cow Leather | 5 | 5 | 5 | 5 | 4 | 4 |

**Table 4 (Continued)**

| Inventive examples | | 21 | 22 | 23 | 24 | 25 |
|---|---|---|---|---|---|---|
| Monomer (a) (mass%) | HUMA-2 | 70 | 70 | 70 | 70 | 70 |
| Monomer (b) (mass%) | SMA | 28 | 28 | 28 | 28 | 28 |
| | FM0725 | | | | | |
| | FM0721 | | | | | |
| | BzMA | | | | | |
| | PME400 | | | | | |
| | HEMA | 2 | | | | |
| | GMA | | 2 | | | |
| | MOI | | | 2 | | |
| | N-MAM | | | | 2 | |
| | DAAM | | | | | 2 |
| (A)/(B) | | 70/30 | 70/30 | 70/30 | 70/30 | 70/30 |
| Weight average Molecular weight | | 59000 | 60000 | 58000 | 62000 | 65000 |
| Water repellent Property | Polyester Fabric | 5 | 5 | 5 | 5 | 5 |
| | Cotton Fabric | 5 | 5 | 5 | 5 | 5 |
| | Cow Leather | 4 | 4 | 4 | 4 | 4 |

**Table 5**

| Comparative Examples | | 1 | 2 | 3 | 4 |
|---|---|---|---|---|---|
| Monomer (a) (mass%) | HUMA-2 | 20 | | | |
| Monomer (b) (mass%) | SMA | 80 | 100 | | |
| Monomer (a') (mass%) | HUMA-8 | | | 100 | |
| | UMA | | | | 100 |
| (A)/(B) | | 20/80 | 0/100 | 0/100 | 0/100 |
| Weight average Molecular weight | | 50,000 | 68,000 | 70,000 | 60,000 |
| Water Repellent property | Polyester Fabric | 4 | 2 | 3 | 4 |
| | Cotton fabric | 2 | 1 | 2 | 2 |
| | Cow leather | 2 | 1 | 2 | 1 |

Abbreviations shown in tables 2 to 5 are as follows.
SMA: methyl methacrylate
nBMA: n-butyl methacrylate
tBMA: tert-butyl methacrylate
CHMA: cyclohexyl methacrylate
IBOMA: Isobornyl methacrylate
FM0721: (Silaplane FM0721) manufactured by JNC (polydimethylsiloxane group containing macromonomer of a molecular weight of 5,000)
FM0725: (Silaplane FM0721) manufactured by JNC (polydimethylsiloxane group containing macromonomer of a molecular weight of 10,000)
BzMA: Benzyl methacrylate
PME400: methoxy polyethylene glycol methacrylate (added average molar number of 9 of ethylene oxide)
HEMA: 2-hydroxyethyl methacrylate
GMA: glycidyl methacrylate
MOI: 2-isocyanatoethyl methacrylate
N-MAM: N-methylol acrylamide
DAAM: diacetone acrylamide

**Table 6**

| Water Repellent Degree | Standard for evaluation |
|---|---|
| 5 | Humidity and adhesion of water droplets are not observed on surface |
| 4 | Adhesion of water droplets is slightly observed on surface |
| 3 | Humidity is observed on a part of surface |
| 2 | Humidity is observed on a half of surface |
| 1 | Humidity is observed over the whole of surface |

As can be seen from the results of tables 2 to 4, excellent water repellent property was obtained in various kinds of materials, according to the inventive examples 1 to 25.

On the other hand, as clearly shown in table 5, the water repellent property was insufficient according to the comparative examples 1 to 4.

Specifically, according to the comparative example 1, as the amount of the structural units derived from the monomer (a) in the polymer was two low, the water repellent property was inferior.

According to the comparative examples 2 to 4, as the polymer does not include the structural units derived from the monomer (a), the water repellent property was inferior.

## Claims

1. A polymer for a water repellent, said polymer comprising a homopolymer comprising structural units derived from a monomer (a) represented by a following formula (1) or a copolymer comprising said structural units derived from said monomer (a) and structural units derived from a vinyl monomer (b) copolymerizable with said monomer (a),
wherein a mass ratio ((a)/(b)) of a mass of said monomer (a) with respect to a mass of said monomer (b) is 100/0 to 30/70. 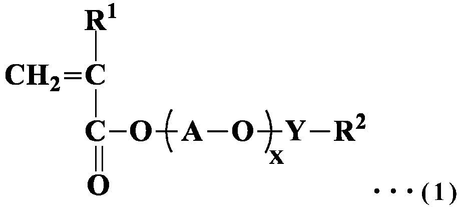 (In the formula (1),
R¹ represents hydrogen atom, methyl group, chlorine, bromine or iodine,
R² represents alkyl group having a carbon number of 12 to 24,
A represents alkylene group having a carbon number of 1 to 10,
X represents 0 or 1, and
Y represents a structure selected from the group consisting of hydroxy urethane structures represented by a following formula (2), formula (3), formula (4) and formula (5).)

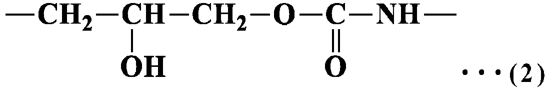

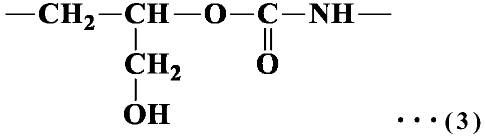

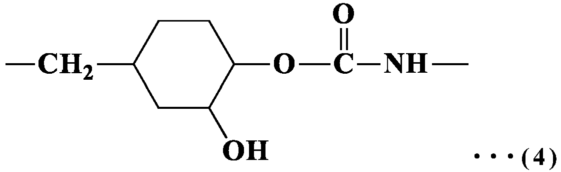

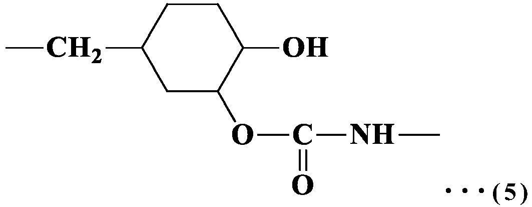

2. The polymer for a water repellent of claim 1, wherein said vinyl monomer (b) is represented by a following formula (6). 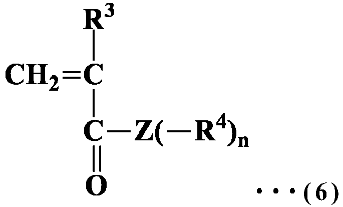 (In the formula (6),
R³ represents hydrogen atom, methyl group, chlorine, bromine or iodine,
Z represents oxygen atom or nitrogen atom,
R⁴ represents hydrogen atom, or hydrocarbon group having a carbon number of 1 to 22 and which may be substituted, and
n represents 1 when Z comprises oxygen atom, and n represents 2 when Z comprises nitrogen atom.)

3. A water repellent composition comprising the polymer for a water repellent of claim 1 or 2 and a liquid medium.

4. A water repellent-treated product to which the polymer for a water repellent of claim 1 or 2 is adhered.
